# EUROPEAN PATENT APPLICATION

(11) **EP 2 315 447 A1**
(43) Date of publication of application: **27.04.2011**
(21) Application number: 09808089.8
(22) Date of filing: 21.08.2009
(51) Int. Cl.: H04N 7/32

(54) **MOTION DETECTION DEVICE**

(30) Priority: 21.08.2008 JP 2008212959
(71) Applicant: Panasonic Corporation, Kadoma-shi Osaka 571-8501 (JP)
(72) Inventor: ESAKI, Kotaro, Osaka 540-6207 (JP); IGUCHI, Masayasu, Osaka 540-6207 (JP); AMANO, Hiroshi, Osaka 540-6207 (JP)
(74) Representative: Grünecker, Kinkeldey, Stockmair & Schwanhäusser Anwaltssozietät
(86) International application number: PCT/JP2009/004034
(87) International publication number: WO 2010/021153

(57) **Abstract**

A motion estimation device configured to estimate motion for blocks included in an input picture using a reference picture includes an internal reference memory configured to store the reference picture transferred from outside the motion estimation device; a motion estimator configured to estimate motion information for a target block that is a block of the input picture and where motion is to be estimated, using pixel data of the reference picture stored in the internal reference memory; a motion compensator configured to perform motion compensation for the target block using the motion information estimated by the motion estimator; and a reference memory manager configured to control the internal reference memory. The reference memory manager is configured to control the internal reference memory to store a luminance reference picture and a color-difference reference picture as the reference picture.

## Description

### CROSS-REFERENCE TO RELATED APPLICATION

This is a continuation of PCT International Application PCT/JP2009/004034 filed on August 21, 2009, which claims priority to Japanese Patent Application No. 2008-212959 filed on August 21, 2008. The disclosures of these applications including the specifications, the drawings, and the claims are hereby incorporated by reference in their entirety.

### BACKGROUND

The present disclosure relates to a motion estimation device that estimates motion for blocks included in a picture.

For motion estimation, a multi-frame memory has been used that stores a plurality of reference pictures. A multi-frame memory is implemented in two separate parts: an external memory provided outside a motion estimation device and an internal memory provided inside the motion estimation device to be accessed during block matching (see Japanese Patent Publication No. H05-260461, for example).

In many video encoding schemes standardized by international standardization groups such as the Moving Picture Experts Group (MPEG) and the International Telecommunications Union (ITU), each of pixels included in an image is divided into a luminance component and color-difference components, making use of the human visual feature, to perform encoding. In motion estimation, in particular, only the luminance component is generally used for reducing the memory space required for storage of reference pictures and the computation amount required for processing of the motion estimation (see WO 1998/042135, for example).

In a motion estimation device that performs motion estimation using only the luminance component as described above, luminance pixels in a region of a reference picture to be searched are first transferred from an external memory to an internal memory via an external connection bus and stored in the internal memory. During motion estimation, the reference picture stored in the internal memory is read and used.

Motion compensation is then performed, in which, for the luminance component, data stored in the internal memory is used. However, for the color-difference components, data must be read from the external memory via the external connection bus. This increases the data transfer amount of the external connection bus.

The above configuration will pose no problem if a small-size image, like a standard definition (SD) image, is to be encoded. Even encoding of a large-size image, like a high definition (HD) image, will pose no problem as far as the number of images per unit time, or the picture rate, is comparatively low, because the required data transfer rate will not exceed the maximum transfer amount per unit time allowed for the external connection bus.

Reference is also to be made to "Advanced video coding for generic audiovisual services" (§8.4 Inter prediction process), ITU-T Recommendation H.264, 11/2007, pp. 143-169.

### SUMMARY

Since consumer camcorders (or video cameras) capable of recording HD images have been becoming widespread in recent years, it is expected that the size of images recorded may become larger and the picture rate may become higher in the near future.

One method to address the above problem is to increase the transfer amount per unit time allowed for the external connection bus by replacing the external memory with a higher performance one and by increasing the number of memories placed externally. However, in replacing the external memory with a higher performance one, an expensive memory will be necessary as the external memory. Also, the operating speed of the bus will increase, resulting in increase of the power consumption of the entire product including the motion estimation device. In increasing the number of memories placed externally, also, the cost and the power consumption will increase.

As another method, the number of reference pictures may be reduced, or the range within which search for motion can be made may be reduced. However, reducing such a requirement easily will greatly degrade the quality of the image recorded.

It is an objective of the present invention to achieve encoding of a larger-size images and encoding of images at higher picture rate while preventing or reducing increase in cost and degradation in image quality.

The motion estimation device of an embodiment of the present invention is a motion estimation device configured to estimate motion for blocks, the device including in an input picture using a reference picture includes an internal reference memory configured to store the reference picture transferred from outside the motion estimation device; a motion estimator configured to estimate motion information for a target block that is a block of the input picture and where motion is to be estimated, using pixel data of the reference picture stored in the internal reference memory; a motion compensator configured to perform motion compensation for the target block using the motion information estimated by the motion estimator; and a reference memory manager configured to control the internal reference memory. The reference memory manager is configured to control the internal reference memory to store a luminance reference picture and a color-difference reference picture as the reference picture.

With the above configuration, the frequency of data transfer from outside can be reduced, and the data amount per unit time transferred from outside can be reduced. Thus, encoding at higher picture rate can be achieved.

According to the present invention, since transfer of color-difference reference pictures from an external memory can be reduced, it is possible to achieve encoding of images at higher picture rate and encoding of larger-size images while preventing or reducing increase in the cost of external and internal memories, increase in the power consumption of the device, and degradation in image quality.

### BRIEF DESCRIPTION OF THE DRAWINGS

FIG. 1 is a block diagram of a video encoding device according to an embodiment of the present invention.
FIG. 2 is a block diagram of a motion estimation device in FIG. 1.
FIG. 3A is a schematic view showing an example of mapping of a cache memory observed when a bus switch in FIG. 2 selects a direct path from an external memory, and FIG. 3B is a schematic view showing an example of mapping of the cache memory observed when the bus switch selects a path from the cache memory.
FIG. 4 is a view illustrating, on a screen, an example of the region to which a reference picture stored in the cache memory corresponds.
FIG. 5 is a block diagram of an AV processing apparatus having the video encoding device of FIG. 1.
FIG. 6 is a block diagram of a variation of the video encoding device of FIG. 1.
FIG. 7 is a flowchart showing a flow of processing by the video encoding device of FIG. 6.
FIG. 8A is a schematic view showing the first variation of FIG. 3A, and FIG. 8B is a schematic view showing the first variation of FIG. 3B.
FIG. 9A is a view illustrating, on a screen, an example of the region to which a reference picture stored in the cache memory corresponds in the case of FIG. 8A, and FIG. 9B is a view illustrating, on a screen, an example of the region to which a reference picture stored in the cache memory corresponds in the case of FIG. 8B.
FIG. 10A is a schematic view showing the second variation of FIG. 3A, and FIG. 10B is a schematic view showing the second variation of FIG. 3B.
FIG. 11A is a view illustrating, on a screen, an example of the region to which a reference picture stored in the cache memory corresponds in the case of FIG. 10A, and FIG. 11B is a view illustrating, on a screen, an example of the region to which a reference picture stored in the cache memory corresponds in the case of FIG. 10B.
FIG. 12A is a schematic view showing the third variation of FIG. 3A, and FIG. 12B is a schematic view showing the third variation of FIG. 3B.

### DETAILED DESCRIPTION

An embodiment of the present invention will be described hereinafter with reference to the drawings.

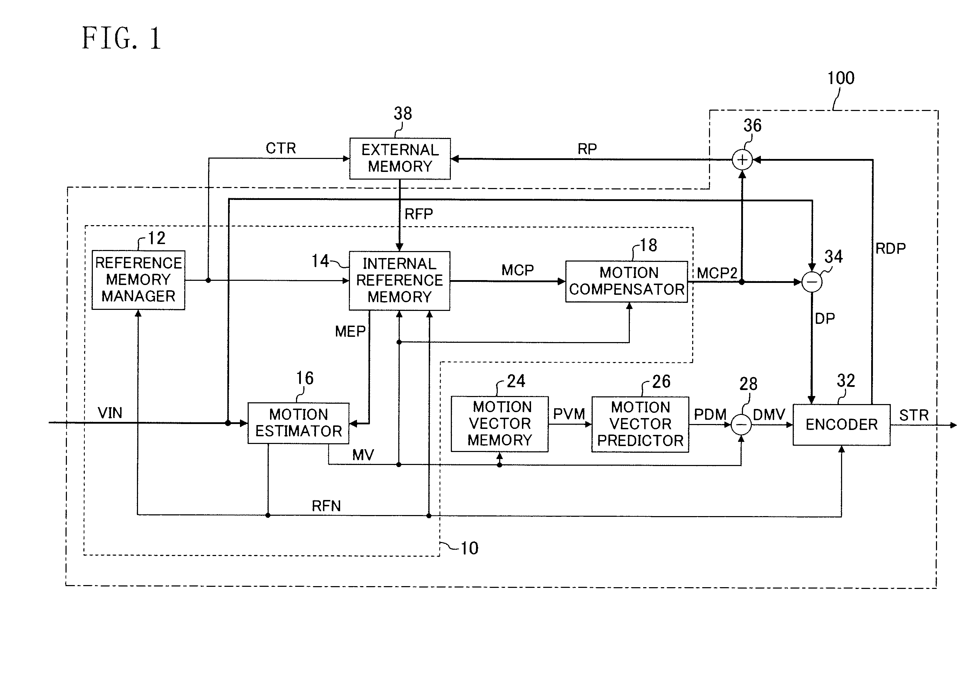

FIG. 1 is a block diagram of a video encoding device 100 according to an embodiment of the present invention. The video encoding device 100 of FIG. 1, which performs inter-frame predictive coding, includes a motion estimation device 10, a motion vector memory 24, a motion vector predictor 26, subtractors 28 and 34, an encoder 32, and an adder 36. The motion estimation device 10 includes a reference memory manager 12, an internal reference memory 14, a motion estimator 16, and a motion compensator 18. Assume herein that the motion estimation device 10 is integrated into one chip, included in one large-scale integration (LSI) circuit.

An external memory 38 is coupled to the motion estimation device 10 via an external connection bus. The external memory 38, which is a high-capacity memory such as a synchronous dynamic random access memory (SDRAM), is used as a multi-frame memory for storing a plurality of reference pictures for motion estimation that are required for inter-frame prediction. The reference memory manager 12 controls data transfer from the external memory 38 to the internal reference memory 14: it controls transfer of pixel data in a region used for motion compensated prediction from the external memory 38 to the internal reference memory 14.

An input picture to be encoded is input into the motion estimator 16 as a video signal VIN. The motion estimator 16 also receives a reference picture for motion estimation read from the external memory 38 via the internal reference memory 14, and determines a motion vector MV and a reference frame number RFN for each of blocks included in the input picture. The reference frame number RFN is a number for identifying a reference picture, among the plurality of pictures, referred to in encoding of the input picture. The motion vector MV is temporarily stored in the motion vector memory 24 and then output as a neighboring motion vector PVM. The motion vector predictor 26 predicts a predicted motion vector PDM with reference to the neighboring motion vector PVM.

The subtractor 28 subtracts the predicted motion vector PDM from the motion vector MV and outputs the resultant difference as a motion vector predicted difference DMV. The internal reference memory 14 outputs pixels indicated by the reference frame number RFN and the motion vector MV as motion compensation pixels MCP. The motion compensator 18 generates reference pixels with fractional pixel precision based on the motion vector MV and the motion compensation reference pixels MCP and outputs the pixels as reference frame pixels MCP2. The subtractor 34 subtracts the reference frame pixels MCP2 from the input picture and outputs the resultant difference as a frame prediction error DP.

The encoder 32 performs discrete cosine transform (DCT) and quantization for the frame prediction error DP, then performs variable-length encoding for a quantized DCT coefficient, the motion vector predicted difference DMV, and the reference frame number RFN, and outputs the resultant encoded image data as an image stream STR. The encoder 32 also decodes the encoded frame prediction error and outputs the result as a decoded frame prediction error RDP. The decoded frame prediction error RDP is equal to the frame prediction error DP with an encoding error added thereon, which corresponds with an inter-frame prediction error obtained by decoding the image stream STR.

The adder 36 adds the decoded frame prediction error RDP to the reference frame pixels MCP2, and the added result is stored in the external multi-frame memory 38 as a decoded frame RP. Note however that, for effective use of the space of the external memory 38 and the internal reference memory 14, if a frame stored in these memories is unnecessary, the area in which the frame has been stored is released, and the decoded frame RP for such an unnecessary frame is not stored.

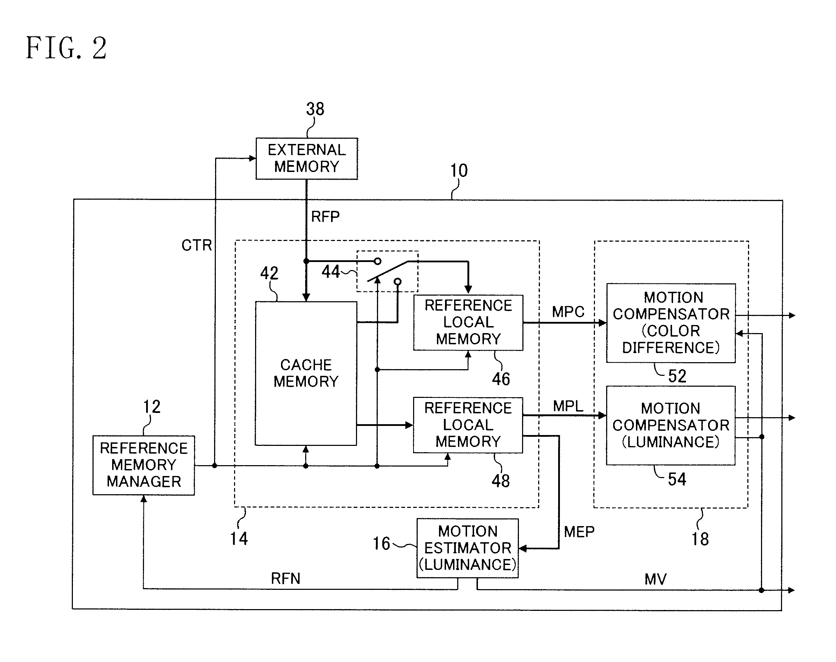

FIG. 2 is a block diagram of an example of the motion estimation device 10 in FIG. 1. The internal reference memory 14 includes a cache memory 42, a bus switch 44 and reference local memories 46 and 48. The motion compensator 18 includes a color-difference motion compensator 52 and a luminance motion compensator 54.

The cache memory 42 stores pixels transferred from the external memory 38 and outputs the pixels to the reference local memory 48 and the bus switch 44. The reference local memory 48 is referred to when the motion estimator 16 actually performs pixel search. This hierarchical configuration is for reducing the pixel transfer amount from the external memory 38. More specifically, the access frequency to the external memory 38 is kept low by storing a large quantity of reference pictures into the cache memory 42 at a time, and reference picture data is transferred from the cache memory 42 to the reference local memory 48 whenever necessary during execution of motion estimation in which the access frequency to reference pictures is high.

The bus switch 44 switches between two input paths to the reference local memory 46 where color-difference (chroma) reference pictures (reference pictures with respect to color difference) are stored. More specifically, the bus switch 44 operates to transfer a color-difference reference picture stored in the external memory 38 to the reference local memory 46 directly or after being stored in the cache memory 42, under the instruction of the reference memory manager 12.

When the bus switch 44 selects the direct path from the external memory 38, the following operation is performed. That is, under the instruction of the reference memory manager 12, first, luminance reference pictures (reference pictures with respect to luminance) required by the motion estimator 16 for search are transferred from the external memory 38 to the cache memory 42 and stored. Reference picture data, among the reference pictures stored in the cache memory 42, required by the motion estimator 16 for search is transferred to the reference local memory 48, to allow the motion estimator 16 to perform search with reference to the transferred data. At this time, no color-difference reference picture is stored in the cache memory 42. Thereafter, color-difference reference picture data at a position indicated by motion information (motion vector) obtained as a result of the search by the motion estimator 16 is directly transferred from the external memory 38 to the reference local memory 46, to allow the motion compensator 52 to perform motion compensation of the color-difference components with reference to the transferred data.

Conversely, when the bus switch 44 selects the path from the cache memory 42, the following operation is performed. That is, under the instruction of the reference memory manager 12, first, luminance reference pictures required by the motion estimator 16 for search are transferred from the external memory 38 to the cache memory 42 and stored. At this time, the corresponding color-difference reference pictures at the same position as the luminance reference pictures are also transferred to the cache memory 42 and stored. Luminance reference picture data, among the reference pictures stored in the cache memory 42, required by the motion estimator 16 for search is then transferred to the reference local memory 48, to allow the motion estimator 16 to perform search with reference to the transferred data. Thereafter, also under the instruction of the reference memory manager 12, color-difference reference picture data at a position indicated by motion information obtained as a result of the search by the motion estimator 16 is transferred from the cache memory 42 to the reference local memory 46, to allow the motion compensator 52 to perform motion compensation for the color-difference components with reference to the transferred data.

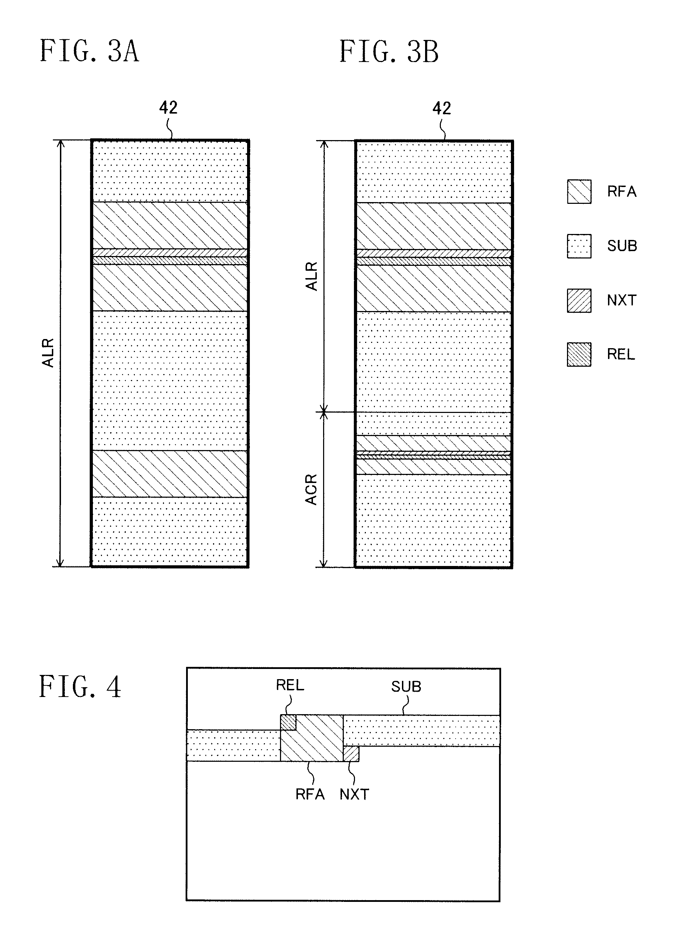

FIGS. 3A and 3B are schematic views showing an example of mapping of the cache memory 42 observed when the bus switch 44 in FIG. 2 selects the direct path from the external memory 38 and the path from the cache memory 42, respectively. FIG. 4 is a view illustrating, on a screen, an example of the region to which a reference picture stored in the cache memory 42 corresponds.

Logical mapping will be described hereinafter for the sake of simplicity. Actually, since a reference region comprised of a combination of rectangular regions as shown in FIG. 4 is mapped on the cache memory 42, some contrivance is often made to facilitate physical mapping on the cache memory 42. In such a case, this logical mapping is to be converted to physical mapping and used.

Reference picture data corresponding to a reference region RFA in FIG. 4, out of a reference picture in the cache memory 42, is transferred to the luminance reference local memory 48, to be referred to by the motion estimator 16. Out of the reference picture used by the motion estimator 16, a region that is not used as a reference picture in the next target block is regarded as a next-time release region REL in FIG. 4.

The region REL, which will be unnecessary in subsequent motion estimation, is reserved for a next-time acquisition region NXT to be utilized as a region used as a reference picture in the next target block. The region other than the above regions is not used as a reference picture in a target block for motion estimation, but is mapped as a reserve storage region SUB to be used as a reference picture in a target block at the occasion of subsequent motion estimation.

In other words, the reference pictures in the cache memory 42 are mapped in a first-in, first-out (FIFO) manner. The next-time release region REL is reserved for the next-time acquisition region NXT immediately after being released. The reference region RFA is transferred to the reference local memory 48 to be referred to by the motion estimator 16. By repeating this operation, motion estimation of the entire picture can be performed. The management of the cache memory 42 as descried above is performed by the reference memory manager 12.

When the bus switch 44 in FIG. 2 selects the direct path from the external memory 38, the entire cache memory 42 is secured as an area ALR for storing luminance reference picture data as shown in FIG. 3A. In the area ALR, the reference region RFA, the next-time release region REL, the next-time acquisition region NXT, and the reserve storage region SUB are mapped.

When the bus switch 44 in FIG. 2 selects the path from the cache memory 42, the cache memory 42 is secured as, not only the area ALR for storing luminance reference picture data, but also an area ACR for storing color-difference reference picture data, as shown in FIG. 3B. In each area, the reference region RFA, the next-time release region REL, the next-time acquisition region NXT, and the reserve storage region SUB are mapped. In this case, the area ALR is made smaller in the cache memory 42 than that in FIG. 3A by reducing the number of luminance reference pictures, for example, to make space for the area ACR for the color-difference components. In the cache memory 42, as many color-difference reference pictures as possible are stored in the address space (area ACR) where no luminance reference picture is stored.

The reference memory manager 12 in FIG. 2 controls the bus switch 44 based on a format of the input picture to be encoded. The reference memory manager 12, which has a register, for example, determines a transfer flag based on a format of the input picture, stores the transfer flag in the register, and controls the bus switch 44 based on the transfer flag.

For example, the reference memory manager 12 determines the transfer flag based on the picture structure for control of the bus switch 44. Specifically, when the input picture is a frame picture where lines are sequentially arranged vertically, the bus switch 44 selects the path from the cache memory 42. When the input picture is a field picture where a first field having only odd-numbered lines sequentially arranged vertically and a second field having only even-numbered lines sequentially arranged vertically are displayed alternately, the bus switch 44 selects the direct path from the external memory 38.

The reference memory manager 12 may determine the transfer flag based on the rate of the input picture (the number of pictures displayed every second or the number of pictures encoded every second) for control of the bus switch 44. Specifically, the bus switch 44 may select the path from the cache memory 42 when the rate of the input picture is equal to or higher than a predetermined value, and select the direct path from the external memory 38 when the rate is lower than the predetermined value.

Alternatively, the reference memory manager 12 may determine the transfer flag based on the size of the input picture, e.g., (the number of pixels displayed every line) × (the number of lines) for control of the bus switch 44. Specifically, the bus switch 44 may select the path from the cache memory 42 when the size of the input picture is equal to or larger than a predetermined value, and select the direct path from the external memory 38 when the size is smaller than the predetermined value.

Otherwise, the reference memory manager 12 may determine the transfer flag based on the color-difference signal format of the input picture (the ratio of the number of pixels of the luminance component to the numbers of pixels of the two color-difference components in the picture, which is any of 4:2:0, 4:2:2, and 4:4:4) or the number of bits with which one pixel is expressed, for control of the bus switch 44. For example, the bus switch 44 may select the path from the cache memory 42 when the color-difference format is 4:4:4, and otherwise select the direct path from the external memory 38.

The reference memory manager 12 may otherwise determine the transfer flag based on a combination of the above formats of the input picture to be encoded described above for control of the bus switch 44.

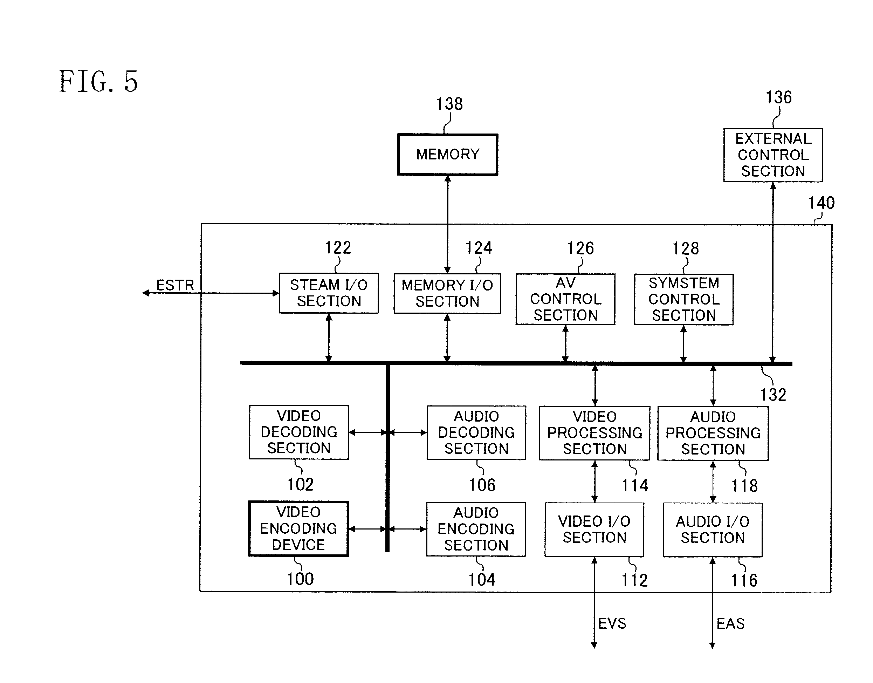

FIG. 5 is a block diagram of an audiovisual (AV) processing apparatus 140 having the video encoding device 100 of FIG. 1. The AV processing apparatus 140 of FIG. 5, used for a digital versatile disc (DVD) recorder and a hard disk recorder, reproduces digital-compressed voice and images and digital-compresses voice and images. The AV processing apparatus 140 performs video encoding/decoding according to ITU-T Recommendation H.264, for example.

The AV processing apparatus 140 includes the video encoding device 100 of FIG. 1, a video decoding section 102, an audio encoding section 104, an audio decoding section 106, a video input/output (I/O) section 112, a video processing section 114, an audio I/O section 116, an audio processing section 118, a stream I/O section 122, a memory I/O section 124, an AV control section 126, a system control section 128, and a bus 132. An external control section 136 is coupled to the bus 132.

The stream I/O section 122, coupled to the bus 132, receives and outputs audio and video stream data ESTR. The video encoding device 100 encodes an image, and the video decoding section 102 decodes an image. The audio encoding section 104 encodes voice, and the audio decoding section 106 decodes voice. The memory I/O section 124 is an interface for input/output of data signals from/to a memory 138. The memory 138, including the external memory 38 in FIG. 1, stores data such as stream data, encoded data, and decoded data.

The video processing section 114 performs pre- and post-processing for a video signal. The video I/O section 112 outputs a video data signal that has been processed by the video processing section 114, or just has passed through the video processing section 114 without being processed, to the outside as a video signal EVS. The video I/O section 11 2 also receives a video signal EVS from the outside.

The audio processing section 118 performs pre- and post-processing for an audio signal. The audio I/O section 116 outputs an audio data signal that has been processed by the audio processing section 118, or just has passed through the audio processing section 118 without being processed, to the outside as an audio signal EAS. The audio I/O section 116 also receives an audio signal EAS from the outside. The AV control section 126 controls the entirety of the AV processing apparatus 140. The bus 132 transfers data such as stream data and audio/video decoded data.

Only encoding operation will be described hereinafter with reference to FIG. 5. First, a video signal EVS is input into the video I/O section 112 while an audio signal EAS is input into the audio I/O section 116. The video processing section 114 then performs feature extraction for filtering and encoding for the video signal EVS input into the video I/O section 112, and stores the result in the memory 138 via the memory I/O section 124 as original video data. Thereafter, the original video data and reference picture data are transferred from the memory 138 to the video encoding device 100 via the memory I/O section 124. The video encoding device 100 encodes the original video data and stores the resultant video stream and locally-decompressed data in the memory 138.

Likewise, the audio processing section 118 performs feature extraction for filtering and encoding for the audio signal EAS input into the audio I/O section 116, and stores the result in the memory 138 via the memory I/O section 124 as original audio data. Thereafter, the original audio data is transferred from the memory 138 to the audio encoding section 104 via the memory I/O section 124. The audio encoding section 104 encodes the original audio data and stores the resultant audio stream in the memory 138.

Finally, the stream I/O section 122 integrates the video stream, the audio stream, and other stream information into one stream and outputs the integrated stream as stream data ESTR. The stream data ESTR is written in a recording medium such as an optical disk and a hard disk.

The reference memory manager 12 in FIG. 2 controls the bus switch 44 based on a format of the input picture to be encoded as described above. In relation to this, the format of the input picture may be estimated by the video I/O section 112 in FIG. 5, may be determined in advance in a program for controlling the system executed by the system control section 128 in FIG. 5, or may be determined by the external control section 136.

Alternatively, the reference memory manager 12 in FIG. 2 may control the bus switch 44 based on the encoding bit rate of the stream output from the stream I/O section 122 (the number of bits of the stream output per second). The encoding bit rate of the stream may be estimated by the stream I/O section 122 in FIG. 5, may be determined in advance in a program for controlling the system executed by the system control section 128, or may be determined by the external control section 136.

Otherwise, the reference memory manager 12 in FIG. 2 may control the bus switch 44 based on the transfer bandwidth of the memory 138 controlled by the memory I/O section 124 (the data amount transferred between the memory 138 and the memory I/O section 124 per second). The transfer bandwidth may be estimated by the memory I/O section 124, may be determined in advance in a program for controlling the system executed by the system control section 128, or may be determined by the external control section 136.

The reference memory manager 12 may otherwise control the bus switch 44 based on a combination of the formats of the input picture, the encoding bit rate of the stream, and the transfer bandwidth of the memory.

The reference memory manager 12 may determine the transfer flag based on the recording mode set outside the motion estimation device 10. For example, the video I/O section 112 may directly set the recording mode for the reference memory manager 12, or the AV control section 126 may extract estimation information from the video I/O section 112 and set the recording mode based on the extracted information. Alternatively, the stream I/O section 122 or the memory I/O section 124 may set the recording mode. It is otherwise possible to use a recording mode determined in advance in a program for controlling the system executed by the system control section 128 that controls the entirety of the AV processing apparatus 140. The system control section 128 may otherwise extract information estimated by the video I/O section 112, the stream I/O section 122, or the memory I/O section 124 and set the recording mode based on the extracted information. Otherwise, the recording mode may be set by the external control section 136.

The transfer flag may be set directly, not via the recording mode, in the reference memory manager 12. Thus, any block of the apparatus coupled to the video encoding device 100 having the reference memory manager 12 can set the transfer flag directly or indirectly, to control the bus switch 44.

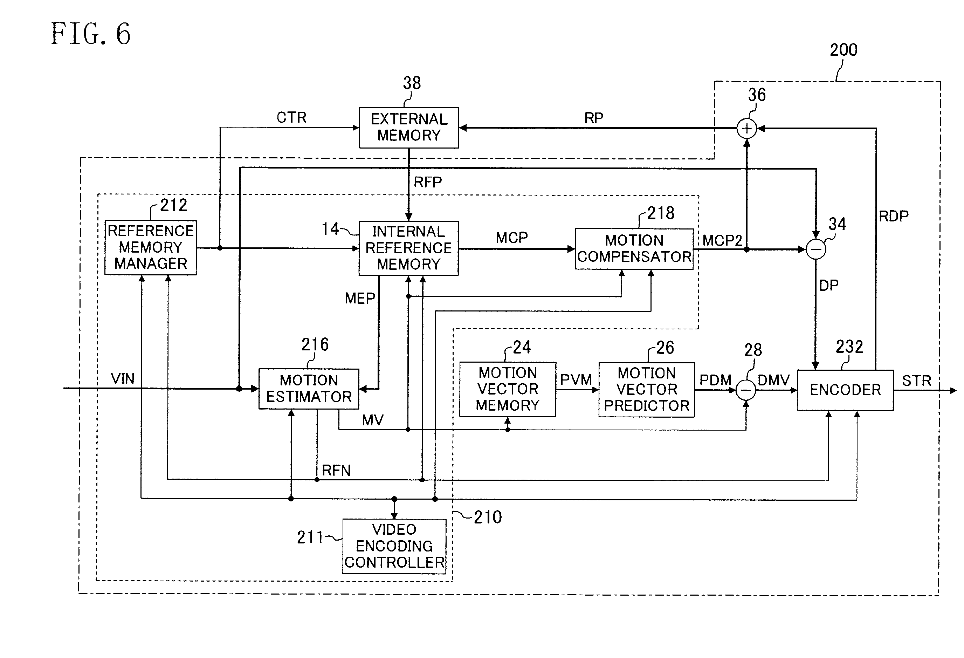

FIG. 6 is a block diagram showing a variation of the video encoding device of FIG. 1. Referring to FIG. 6, a video encoding device 200 includes a motion estimation device 210, the motion vector memory 24, the motion vector predictor 26, the subtractors 28 and 34, an encoder 232, and the adder 36. The motion estimation device 210 is different from the motion estimation device 10 in FIG. 1 in having a reference memory manager 212, a motion estimator 216, and a motion compensator 218 in place of the reference memory manager 12, the motion estimator 16, and the motion compensator 18, and newly having a video encoding controller 211. The reference memory manager 212, the motion estimator 216, the motion compensator 218, and the encoder 232 are respectively the same as the reference memory manager 12, the motion estimator 16, the motion compensator 18, and the encoder 32 in FIG. 1 except that they are subjected to control by the video encoding controller 211.

The video encoding control section 211 operates the reference memory manager 212, to transfer reference pictures referred to by the motion estimator 216 and the motion compensator 218 from the external memory 38 to the internal reference memory 14. Once reference picture data is stored in the internal reference memory 14, the video encoding control section 211 operates the motion estimator 216, to search the reference pictures. When the motion estimator 216 estimates motion, the video encoding control section 211 operates the reference memory manager 212 again, to transfer reference picture data required by the motion compensator 218, thereby to allow the motion compensator 218 to perform motion compensation.

Once the motion compensator 218 completes the motion compensation, the video encoding control section 211 operates the encoder 232. The encoder 232 encodes the difference between a predicted image generated by the motion compensator 218 and the input image, and outputs the result as the stream STR, as well as outputting difference image data. To store a reference picture to be required for the next inter-frame prediction in the external memory 38, a reconstructed image is generated from the difference image data and the predicted image generated by the motion compensator 218, and transferred to the external memory 38.

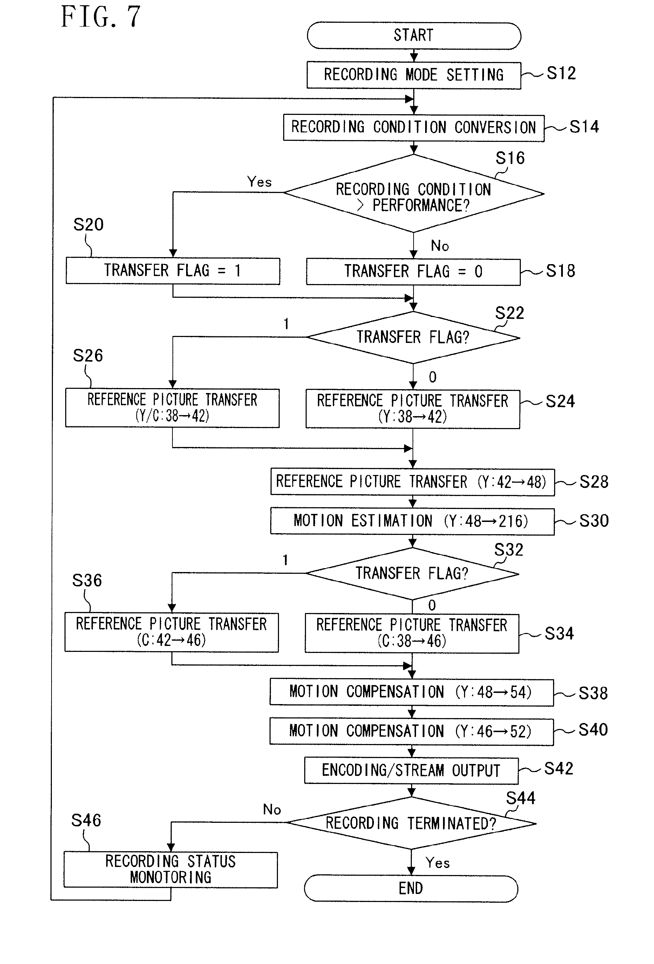

FIG. 7 is a flowchart showing the processing by the video encoding device 200 of FIG. 6. In step S12 of recording mode setting, any one of the configuration of the input image, the encoding bit rate of the output stream, etc. is set as the recording mode. In step S14 of recording condition conversion, the video encoding controller 211 converts the recording mode set in the step S12 to information (recording condition) that is required to determine whether all the processing can be completed within a predetermined time. For example, assuming that the information set in the step S12 is the image size, the display rate, the image composition, or the encoding bit rate, the recording condition after the conversion will be the data amount transferred to/from the external memory 38 per unit time (data transfer bandwidth), the capacity of the cache memory 42, or the frequency at which inter-frame predictive coding is performed.

In step S16 of transfer determination, the video encoding controller 211 determines whether the converted recording condition exceeds the maximum performance the video encoding device 200 can exhibit according to the conventional procedure. If it is determined that the required performance does not exceed the maximum performance, the video encoding controller 211 sets the transfer flag at 0 in step S18 of transfer flag setting. If it is determined that the required performance exceeds the maximum performance, the video encoding controller 211 sets the transfer flag at 1 in step S20 of transfer flag setting. In this way, the transfer flag is set based on the set recording mode. The reference memory manager 212 stores the transfer flag in its register, for example.

From the information of the transfer flag set in the step S 18 or S20, the procedure of transfer of reference pictures is determined in step S22 of transfer mode determination. Specifically, the process proceeds to step S24 of reference picture transfer if the transfer flag is 0, or to step S26 of reference picture transfer if the transfer flag is 1, whereby the reference memory manager 212 changes what to store in the cache memory 42.

In the step S24, the reference memory manager 212 maps the cache memory 42 as shown in FIG. 3A, and transfers luminance reference picture data from the external memory 38 to the cache memory 42. Conversely, in the step S26, the reference memory manager 212 maps the cache memory 42 as shown in FIG. 3B, in which color-difference reference picture data, in addition to luminance reference picture data, can be stored in the cache memory 42, and transfers color-difference reference picture data, in addition to luminance reference picture data, from the external memory 38 to the cache memory 42.

In step S28 of reference picture transfer, the video encoding controller 211 transfers reference picture data required for search by the motion estimator 16 from the cache memory 42 to the reference local memory 48. Once the reference picture data required for search by the motion estimator 16 is stored in the reference local memory 48, the video encoding controller 211 allows the motion estimator 16 to perform search in step S30 of motion estimation.

Once search by the motion estimator 16 is completed, the reference picture transfer procedure is determined again from the information of the transfer flag set in the step S18 or S20 in step S32 of transfer mode determination. Specifically, the process proceeds to step S34 of reference picture transfer if the transfer flag is 0, or to step S36 of reference picture transfer if the transfer flag is 1.

In the step S34, the reference memory manager 212 operates the bus switch 44 so that color-difference reference picture data, among reference picture data required for motion compensation determined from motion information estimated in the step S30, is transferred from the external memory 38 to the reference local memory 46. In the step S36, the reference memory manager 212 operates the bus switch 44 so that color-difference reference picture data, among reference picture data required for motion compensation, is transferred from the cache memory 42 to the reference local memory 46.

In step S38 of motion compensation, the motion compensator 218 performs motion compensation using the motion information estimated in the step S30 and the luminance reference picture data stored in the reference local memory 48. Although the step S38 of motion compensation is described as being performed after the step S34 or S36 of reference picture transfer, the step S38 may perform before the step S34 or S36, or perform simultaneously with the step S34 or S36. Once reference picture data required for motion compensation is stored in the reference local memory 46 in the step S34 or S36, the motion compensator 218 performs motion compensation using the motion information estimated in the step S30 and the color-difference reference picture data stored in the reference local memory 46, in step S40 of motion compensation.

Once the motion compensator 218 generates a predicted image in the steps S38 and S40, the encoder 232 encodes the difference between the input image and the predicted image, and outputs the result as the stream STR, as well as decoding the encoded data to generate a difference image for generation of a reconstructed image, in step S42 of encoding/stream output. The reconstructed image is generated using the predicted image generated in the steps S38 and S40 with the adder 36, and transferred to the external memory 38 as a reference picture used at the next inter-frame prediction.

The series of processing described above is repeated from the point immediately after the step S12 until termination of the recording is determined in step S44 of recording termination. If termination of the recording is not determined in the step S44, whether the maximum processing performance of the video encoding device 200 has exceeded is monitored in step S46 of recording status monitoring, and then the process returns to the point immediately after the step S12. In the step S 14, the recording mode is converted to a recording condition including the monitor information obtained in the step S46. If termination of the recording is determined in the step S44, the video encoding processing is terminated.

The video encoding controller 211 that controls the series of processing described above may be a processor operating by executing a program or a sequencer comprised of a combinational circuit and a sequential circuit. Although the video encoding controller 211 has been described above as being a dedicated controller incorporated in the video encoding device 200, the function of the video encoding controller 211 may be undertaken by the system control section 128 and the external control section 136 in FIG. 5.

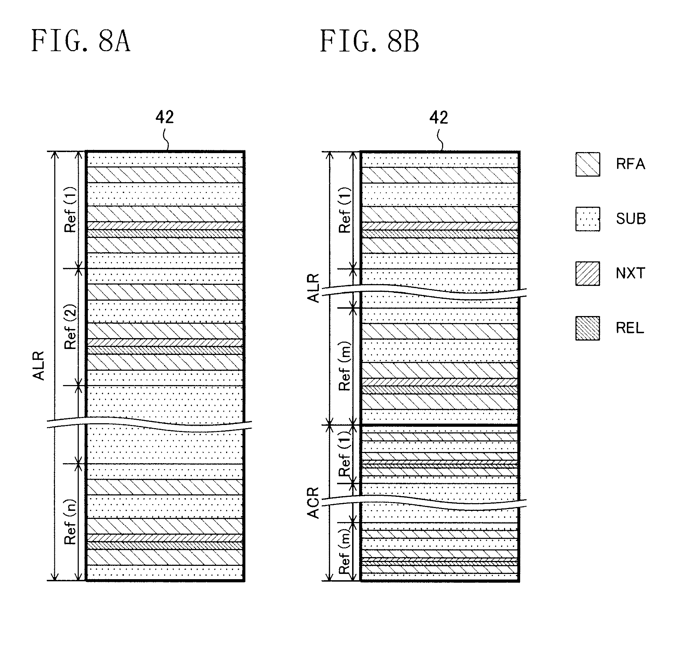

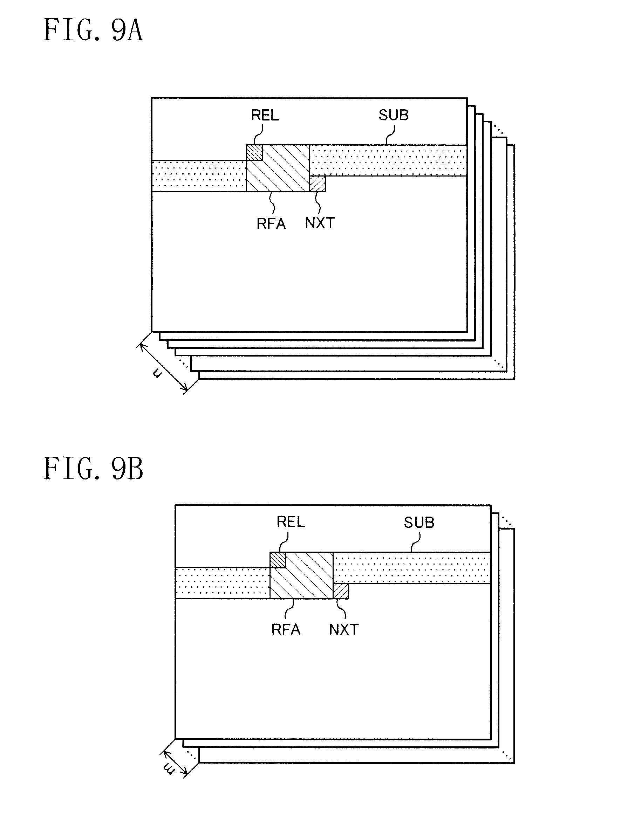

Variations of mapping of the cache memory 42 will be described hereinafter using the video encoding device 100 of FIG. 1. Note that similar results will also be obtained by using the video encoding device 200 of FIG. 6. FIGS. 8A and 8B are schematic views showing the first variation of FIGS. 3A and 3B, respectively. FIGS. 9A and 9B are views illustrating, on a screen, examples of regions to which reference pictures stored in the cache memory 42 correspond in the cases of FIGS. 8A and 8B, respectively. In this variation, the area of the cache memory 42 is divided into the number of reference pictures used by the motion estimator 16.

In this variation, to allow the motion estimator 16 to refer to a plurality of reference pictures during inter-frame prediction of a unit block to be encoded, the cache memory 42 is mapped as shown in FIGS. 8A and 8B so that the reference region RFA, the next-time release region REL, the next-time acquisition region NXT, and the reserve storage region SUB as shown in FIGS. 9A and 9B can be stored by the number of reference pictures, and operation similar to that described above with reference to FIG. 4 is executed for all the reference pictures.

When the bus switch 44 in FIG. 2 selects the direct path from the external memory 38, the entire cache memory 42 is secured as the area ALR for storing luminance reference picture data as shown in FIG. 8A. In this area, the reference region RFA, the next-time release region REL, the next-time acquisition region NXT, and the reserve storage region SUB are mapped by the number n of pictures referred to by the motion estimator 16.

Conversely, when the bus switch 44 in FIG. 2 selects the path from the cache memory 42, the cache memory 42 is secured as, not only the area ALR for storing luminance reference picture data, but also the area ACR for storing color-difference reference picture data as shown in FIG. 8B. Regions for m luminance reference pictures are mapped in the area ALR, and regions for m color-difference reference pictures are mapped in the area ACR. The reference region RFA, the next-time release region REL, the next-time acquisition region NXT, and the reserve storage region SUB are mapped in each of the regions of the reference pictures. In this case, the area ALR of the cache memory 42 is made smaller than that in FIG. 8A by reducing the number of luminance reference pictures, for example, to make space for the area ACR for color-difference reference pictures.

In the above mapping, the total volume of reference pictures mapped to address areas Ref(1) to Ref(n) in the area ALR in FIG. 8A, and the total volume of reference pictures mapped to address areas Ref(1) to Ref(m) in the areas ALR and ACR in FIG. 8B, should not exceed the capacity of the cache memory 42. When the area for reference pictures searched by the motion estimator 16 is invariably fixed irrespective of the switching of the bus switch 44, the number m of reference pictures is invariably smaller than the number n of reference pictures.

More specifically, when the bus switch 44 is controlled statically based on the recording mode, the number of pictures that can be referred to by the motion estimator 16 is changed as shown in FIGS. 9A and 9B. When the color-difference reference picture data is directly transferred from the external memory 38 to the reference local memory 46 via the bus switch 44, the motion estimator 16 refers to n reference pictures for search, as shown in FIG. 9A. On the contrary, when not only the luminance reference picture data but also the color-difference reference picture data are transferred from the external memory 38 to the cache memory 42 and then the color-difference reference picture data, in particular, among the reference pictures stored in the cache memory 42, is transferred to the reference local memory 46 via the bus switch 44, the motion estimator 16 refers to m reference pictures, which is smaller than n pictures, for search, as shown in FIG. 9B.

If the reference memory manager 12 controls the bus switch 44 to invariably transfer color-difference reference picture data from the cache memory 42 to the reference local memory 46, for example, the cache memory 42 will be utilized most efficiently by being mapped so that the ratio of the area ALR to the area ACR is 2:1 when the color-difference signal format of the input picture is 4:2:0, 1:1 when it is 4:2:2, and 1:2 when it is 4:4:4.

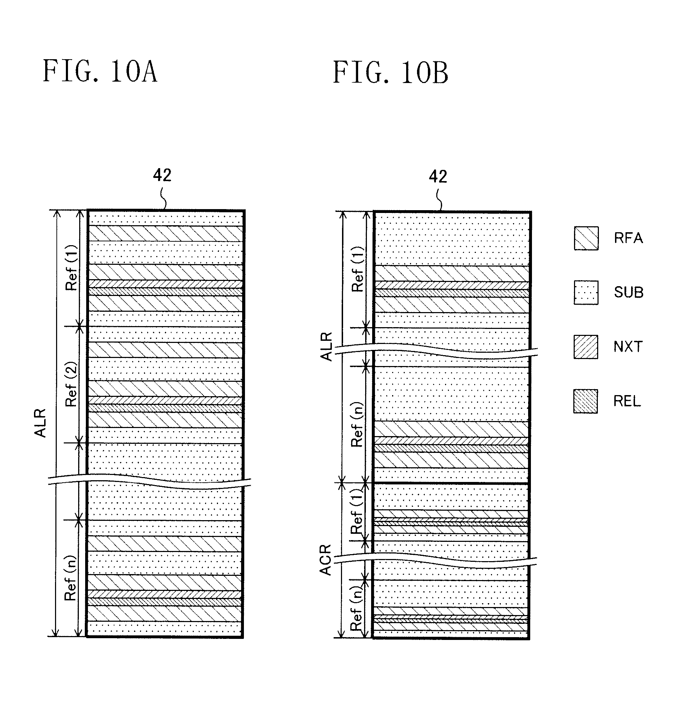

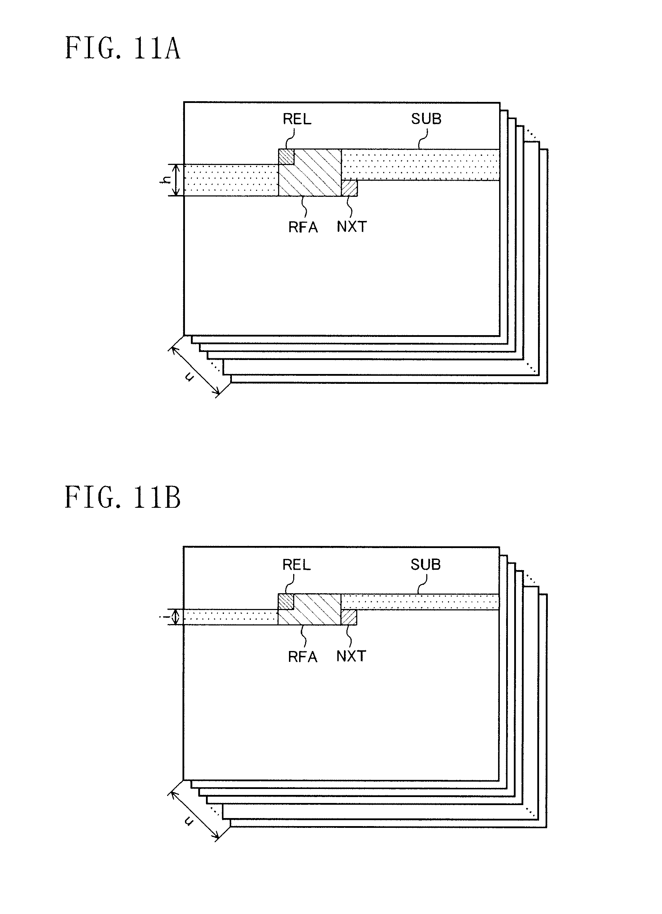

FIGS. 10A and 10B are schematic views showing the second variation of FIGS. 3A and 3B, respectively. FIGS. 11A and 11B are views illustrating, on a screen, examples of regions to which reference pictures stored in the cache memory 42 correspond in the cases of FIGS. 10A and 10B, respectively. In this variation, the space of the cache memory 42 is divided into the number of reference pictures used by the motion estimator 16.

While the number of reference pictures is m (m < n) in the case of FIG. 8B, it is unchanged from n in the case of FIG. 10B. Instead, the reference region RFA of each reference picture shown in FIG. 10B is made smaller than that shown in FIG. 10A.

When color-difference reference picture data is directly transferred from the external memory 38 to the reference local memory 46 via the bus switch 44, the motion estimator 16 searches a reference region having a height h, for example, for each of n reference pictures as shown in FIG. 11A. Conversely, when not only luminance reference picture data but also color-difference reference picture data are transferred from the external memory 38 to the cache memory 42 and then the color-difference reference picture data, in particular, among the reference pictures stored in the cache memory 42, is transferred to the reference local memory 46, the motion estimator 16 searches a reference region having a height i (i < h) for each of n reference pictures as shown in FIG. 11B.

In the case of controlling the bus switch 44 based on the picture structure, or whether the input picture is a frame picture or a field picture, the reference region may be narrowed when the input picture is a frame picture, and widened when it is a field picture, whereby the cache memory 42 can be utilized efficiently. In the case of controlling the bus switch 44 based on the rate of processing of pictures, the reference region may be narrowed when the picture processing rate is low, and widened when it is high, whereby the cache memory 42 can be utilized efficiently.

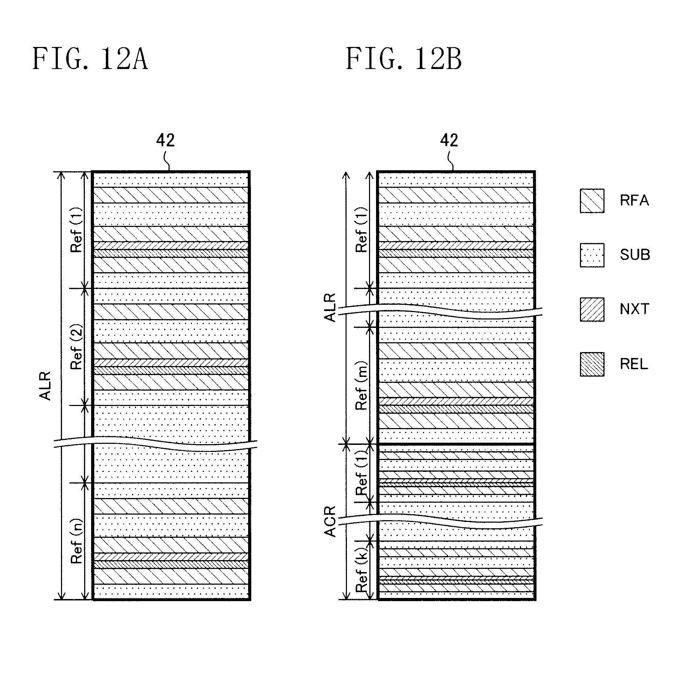

FIGS. 12A and 12B are schematic views showing the third variation of FIGS. 3A and 3B, respectively. Since luminance reference pictures are referred to by the motion estimator 16, large restrictions on the number of reference pictures and the search range will cause degradation in image quality. To minimize such a problem, in FIG. 12B, regions for m luminance reference pictures are mapped in the area ALR, and regions for k color-difference reference pictures are mapped in the area ACR (m > k), and the reference region RFA, the next-time release region REL, the next-time acquisition region NXT, and the reserve storage region SUB are mapped in each of the regions of the reference pictures.

In the above mapping, the total volume of reference pictures mapped to the area ALR (Ref(1) to Ref(n)) in FIG. 12A, and the total volume of reference pictures mapped to the area ALR (Ref(1) to Ref(m)) and the area ACR (Ref(1) to Ref(k)) in FIG. 12B, should not exceed the capacity of the cache memory 42.

Since the number of color-difference reference pictures is smaller than the number of luminance reference pictures in the cache memory 42, it is necessary to control the bus switch 44 dynamically depending on whether a reference picture necessary to be transferred to the reference local memory 46 is stored in the cache memory 42. Such control is entirely performed by the reference memory manager 12 as follows.

The reference memory manager 12 first transfers color-difference reference picture data, as well as luminance reference picture data, from the external memory 38 to the cache memory 42. Thereafter, when the motion estimator 16 uses, as a reference picture optimal to encoding, a luminance reference picture corresponding to a color-difference reference picture that has been transferred to the cache memory 42, the reference memory manager 12 controls the bus switch 44 to transfer the color-difference reference picture from the cache memory 42 to the reference local memory 46.

Conversely, when the motion estimator 16 uses, as a reference picture optimal to encoding, a luminance reference picture corresponding to a color-difference reference picture that has not been transferred to the cache memory 42, the reference memory manager 12 controls the bus switch 44 to transfer the color-difference reference picture directly from the external memory 38 to the reference local memory 46.

In the case of storing only luminance reference picture data in the cache memory as in FIG. 12A, if the cache memory 42 still has space available although all pictures to be referred to by the motion estimator 16 have been stored, color-difference reference picture data may be stored in the available space. With the control as described above, the cache memory 42 can be utilized without waste.

The functional blocks in FIGS. 1, 2, 5, and 6 are typically implemented as LSIs, which may be individually integrated into one chip each, or part or all of the functional blocks may be integrated into one chip. For example, the functional blocks other than the external memory 38 or the memory 138 may be integrated into one chip.

The external memory 38 in FIG. 1 and the memory 138 in FIG. 5, which must retain a large amount of data, are generally implemented by a large-scale DRAM, etc. provided outside an LSI. However, integration into one package or one chip may be made including such a memory.

Although the LSI was mentioned in the above description, it may be replaced with an IC, a system on a chip, a super LSI, an ultra LSI depending on the degree of integration. The technique of circuit integration is not limited to the LSI technology, but a dedicated circuit or a general-purpose processor may be used to achieve circuit integration. A field programmable gate array (FPGA) that can be programmed after LSI fabrication, or a reconfigurable processor that can reconfigure connection and setting of circuit cells inside an LSI may be used. If a circuit integration technology replacing the LSI technology appears along with progress of the semiconductor technology or development of its derivative technology in the future, the functional blocks may naturally be integrated using such a technology. One possibility of such a technology is application of the biotechnology.

As described above, in the embodiment of the present invention, data transfer from the external memory can be reduced. Thus, the present invention is useful for a motion estimation device, etc.

Many features and advantages of the present invention are apparent from the above description, and thus it is intended that all of such features and advantages of the present invention are covered by the scope of the appended claims. Since many changes and modifications may be easily made by those skilled in the art, the present invention should not be limited to exactly the same configurations and operations as those illustrated and described. It is therefore to be understood that all appropriate modifications and equivalents fall within the scope of the invention.

## Claims

1. A motion estimation device configured to estimate motion for blocks included in an input picture using a reference picture, the device comprising:
an internal reference memory configured to store the reference picture transferred from outside the motion estimation device;
a motion estimator configured to estimate motion information for a target block that is a block of the input picture and where motion is to be estimated, using pixel data of the reference picture stored in the internal reference memory;
a motion compensator configured to perform motion compensation for the target block using the motion information estimated by the motion estimator; and
a reference memory manager configured to control the internal reference memory, wherein
the reference memory manager is configured to control the internal reference memory to store a luminance reference picture, which is a reference picture with respect to luminance, and a color-difference reference picture, which is a reference picture with respect to color difference, as the reference picture.

2. The motion estimation device of claim 1, wherein
the reference memory manager performs either first operation of allowing the internal reference memory to store a predetermined-size region of each of a predetermined number of the luminance reference pictures but not to store any color-difference reference picture or second operation of allowing the internal reference memory to store the luminance reference pictures smaller in volume than in the first operation and the color -difference reference pictures corresponding to the smaller-volume luminance reference pictures.

3. The motion estimation device of claim 2, wherein
when the reference memory manager performs the second operation, the internal reference memory stores a region of each of the luminance reference pictures smaller than the predetermined-size region.

4. The motion estimation device of claim 2, wherein
when the reference memory manager performs the second operation, the internal reference memory stores the luminance reference pictures of a number smaller than the predetermined number.

5. The motion estimation device of claim 2, wherein
the motion compensator reads a color-difference reference picture that is necessary for motion compensation but is not stored in the internal reference memory from outside the motion estimation device.

6. The motion estimation device of claim 2, wherein
when the reference memory manager performs the first operation, the motion compensator reads the luminance reference picture at a position corresponding to the motion information estimated by the motion estimator, from the internal reference memory, to perform motion compensation for a luminance component using the read luminance reference picture, and receives a color-difference reference picture at the position from outside the motion estimation device, to perform motion compensation for a color-difference component using the received color-difference reference picture.

7. The motion estimation device of claim 6, wherein
when the reference memory manager performs the first operation, the internal reference memory is mapped to store only the luminance reference pictures.

8. The motion estimation device of claim 2, wherein
when the reference memory manager performs the second operation, the motion compensator reads the luminance reference picture and the color-difference reference picture at a position corresponding to the motion information estimated by the motion estimator, to perform motion compensation for a luminance component and a color-difference component using the read luminance reference picture and color-difference reference picture, respectively.

9. The motion estimation device of claim 8, wherein
when the reference memory manager performs the second operation, the internal reference memory is mapped to store the luminance reference pictures and the color-difference reference pictures.

10. The motion estimation device of claim 2, wherein
the reference memory manager performs either the first operation or the second operation based on a format of the input picture.

11. The motion estimation device of claim 10, wherein
the format of the input picture indicates whether the input picture is a frame picture or a field picture.

12. The motion estimation device of claim 10, wherein
the format of the input picture is a display rate of the input picture.

13. The motion estimation device of claim 10, wherein
the format of the input picture is a size of the input picture.

14. The motion estimation device of claim 10, wherein
the format of the input picture is a color-difference signal format of the input picture.

15. The motion estimation device of claim 2, wherein
the reference memory manager performs either the first operation or the second operation based on a flag.

16. The motion estimation device of claim 15, wherein
the flag is set from outside the motion estimation device.

17. The motion estimation device of claim 15, wherein
the reference memory manager determines the flag based on the input picture.
